# EUROPEAN PATENT APPLICATION

(11) **EP 3 832 401 A1**
(43) Date of publication of application: **09.06.2021**
(21) Application number: 19845207.0
(22) Date of filing: 16.05.2019
(51) Int. Cl.: G04G 17/08, A44C 5/00, G04G 17/00, G04G 21/00, G04G 21/02, H04B 1/3827

(54) **BAND-TYPE ELECTRONIC DEVICE**

(30) Priority: 01.08.2018 JP 2018144948
(71) Applicant: Sony Corporation, 108-0075 Tokyo (JP)
(72) Inventor: AMANO, Toru, Tokyo 108-0075 (JP)
(74) Representative: 2SPL Patentanwälte PartG mbB
(86) International application number: PCT/JP2019/019480
(87) International publication number: WO 2020/026560

(57) **Abstract**

A band-type electronic apparatus includes a band-shaped body configured to be attached to and detached from a user, a display that is contained in the body and displays information, and a first communicator that is contained in the body on an opposite side of the user via the display, with the body being attached to the user, and performs a short distance wireless communication.

## Description

### Technical Field

The **present** technology relates to a band-type electronic apparatus that is attachable to and detachable from any site of a user.

### Background Art

A variety of electronic apparatus have been developed. In particular, a band-type electronic apparatus configured to be attached to any site of a body (a user) attracts attention. Specifically, a wristband-type electronic apparatus configured to be attached to an arm of the user has been proposed. The wristband-type electronic apparatus includes an electronic apparatus body attached to a wristband (see Patent Literature 1, for example).

### Citation List

### Patent Literature

Patent Literature 1: Japanese Unexamined Patent Application Publication No. 2011-203277

### Summary of the Invention

There is, however, room for improvement in that convenience of a band-type electronic apparatus is still not sufficient enough.

Therefore, it is desirable to provide a band-type electronic apparatus that makes it possible to achieve excellent convenience.

A band-type electronic apparatus according to one embodiment of the present technology includes: a band-shaped body configured to be attached to and detached from a user; a display that is contained in the body and displays information; and a first communicator that is contained in the body on an opposite side of the user via the display, with the body being attached to the user, and performs a short distance wireless communication.

According to the band-type electronic apparatus of one embodiment of the present technology, where the band-shaped body is attached to the user, the display is so disposed as to display the information to the user and the first communicator that performs the short distance wireless communication is disposed on the opposite side of the user via the display. Hence, it is possible to achieve excellent convenience.

Note that the effect described here is not necessarily limited, and may be any of the effects described in the present technology.

### Brief Description of Drawing

[FIG. 1] FIG. 1 is a perspective view of a configuration of a band-type electronic apparatus according to an embodiment of the present technology.
[FIG. 2] FIG. 2 is a plan view of the configuration of the band-type electronic apparatus illustrated in FIG. 1.
[FIG. 3] FIG. 3 is another plan view of the configuration of the band-type electronic apparatus illustrated in FIG. 1.
[FIG. 4] FIG. 4 is a cross-sectional view of the configuration of the band-type electronic apparatus illustrated in FIG. 1.
[FIG. 5] FIG. 5 is another cross-sectional view of the configuration of the band-type electronic apparatus illustrated in FIG. 1.
[FIG. 6] FIG. 6 is a plan view of a configuration of a main part of an adjustment mechanism (a fixed plate) illustrated in FIG. 1.
[FIG. 7] FIG. 7 is another plan view of the configuration of the main part of the adjustment mechanism (the fixed plate) illustrated in FIG. 1.

### Modes for Carrying Out the Invention

An embodiment of the present technology will be described below in detail with reference to the drawings. It is to be noted that the description is given in the following order.
1. Band-Type Electronic Apparatus
   1-1. Configuration
   1-2. Operation
   1-3. Workings and Effects
2. Modification Examples

### <1. Band-Type Electronic Apparatus>

A Band-type electronic apparatus according to an embodiment of the present technology will be described.

The band-type electronic apparatus described here is an electronic apparatus to be attached to any site of a body (a user). The site to which the band-type electronic apparatus is to be attached is not particularly limited. Specifically, the band-type electronic apparatus is an electronic apparatus that is to be attached to an arm of the user, for example, by being wrapped around the arm of the user (for example, a wrist), and is a so-called wristband-type electronic apparatus. The band-type electronic apparatus has various functions for the user to utilize as will be described later, and details of the functions will be described later.

### <1-1. Configuration>

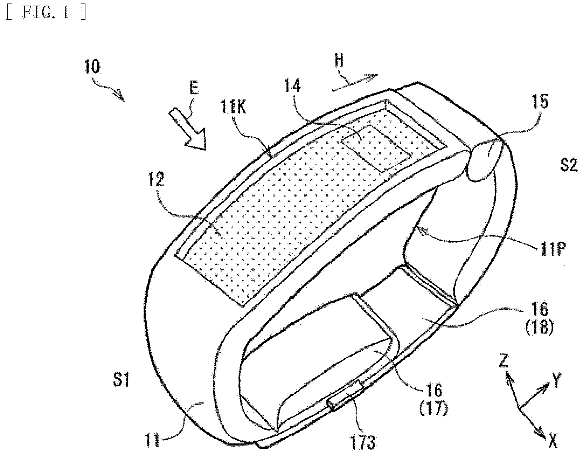

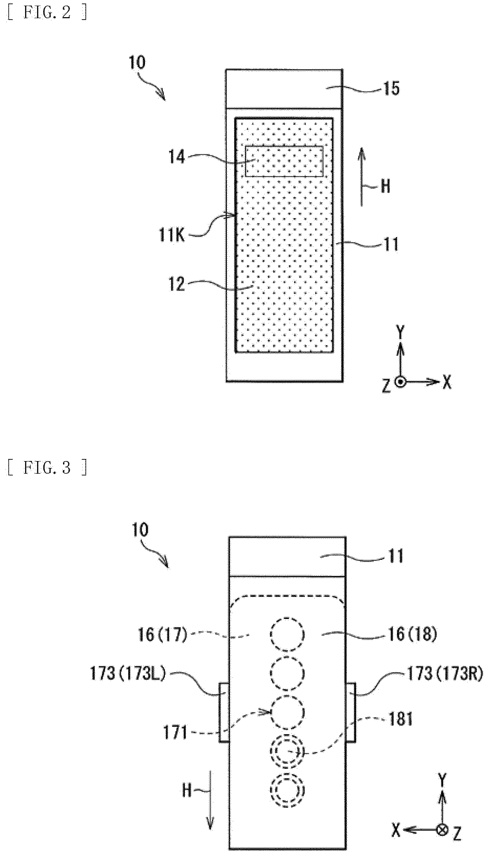

FIG. 1 illustrates a perspective configuration of a band-type electronic apparatus 10 as an example of the band-type electronic apparatus according to an embodiment of the present technology. FIGs. 2 and 3 each illustrate a planar configuration of the band-type electronic apparatus 10 illustrated in FIG. 1. Note that FIG. 2 illustrates a state in which the band-type electronic apparatus 10 is viewed from a line of sight direction E of the user illustrated in FIG. 1, and FIG. 3 illustrates a state in which the band-type electronic apparatus 10 is viewed from a direction opposite to the line of sight direction E described above.

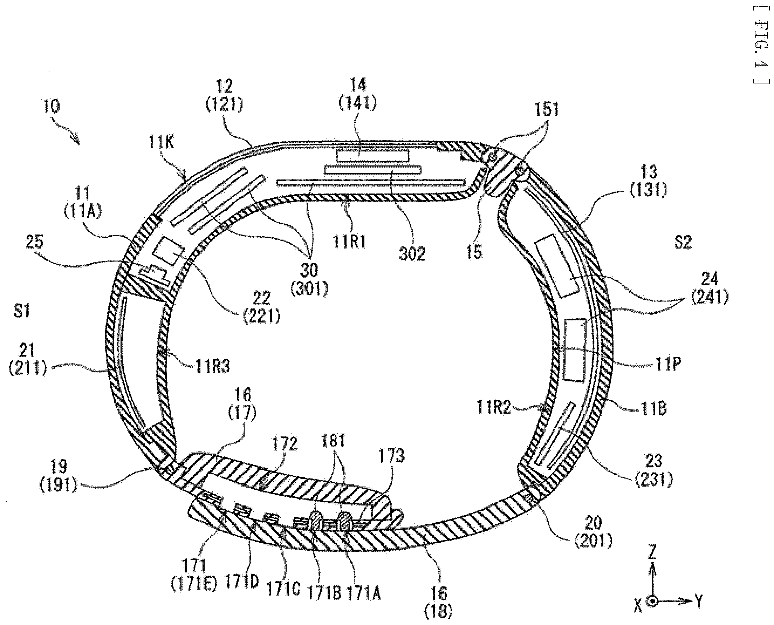

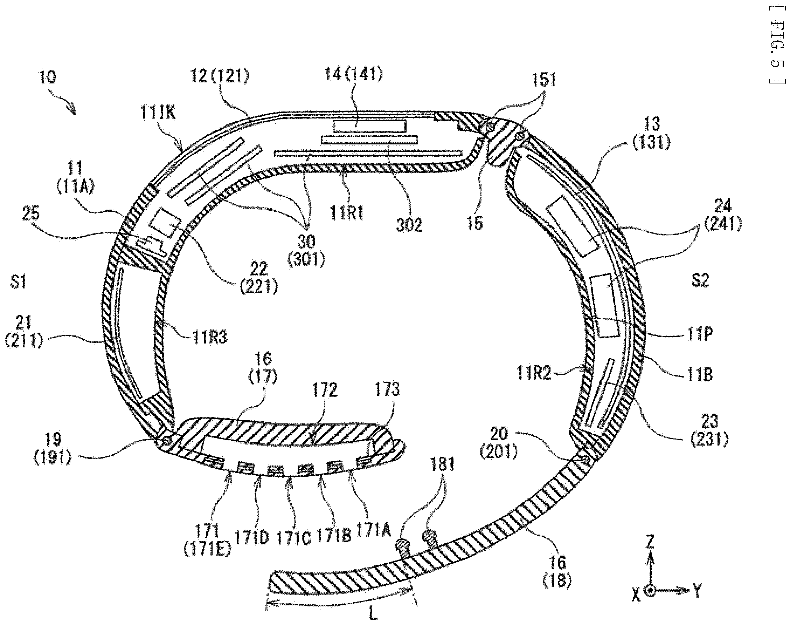

FIGs. 4 and 5 each illustrate a cross-sectional configuration (a cross-sectional configuration along a Y-Z plane) of the band-type electronic apparatus 10 illustrated in FIG. 1. Note that FIG. 4 illustrates a state in which a fixing plate 18 is fixed to a fixed plate 17 of an adjustment mechanism 16, and FIG. 5 illustrates a state in which the fixing plate 18 is detached from the fixed plate 17 of the adjustment mechanism 16.

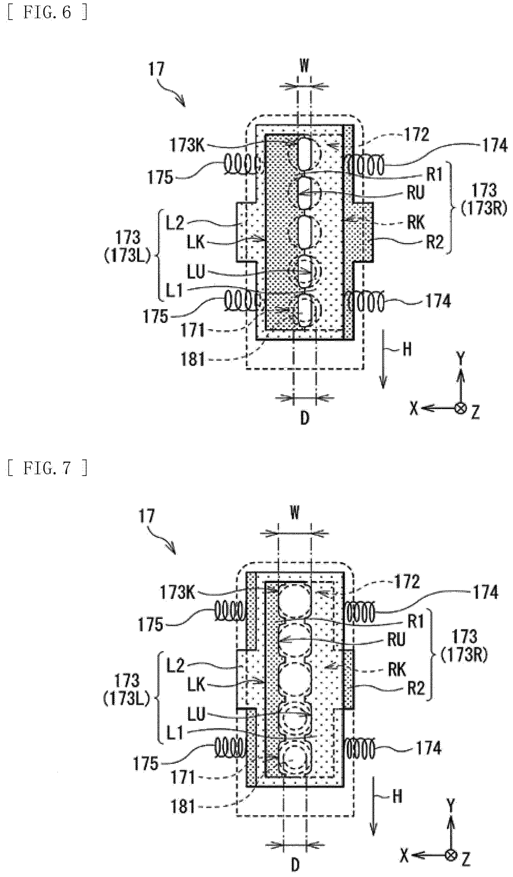

FIGs. 6 and 7 each illustrate a planar configuration of a main part (two movable plates 173) of the adjustment mechanism 16 (the fixed plate 17) illustrated in FIG. 1. Note that FIG. 6 illustrates a state in which the fixing plate 18 is fixed to the fixed plate 17 and thus the fixing plate 18 is made undetachable from the fixed plate 17. FIG. 7 illustrates a state in which the fixing plate 18 is released from the fixed plate 17 and thus the fixing plate 18 is made detachable from the fixed plate 17.

For example, as illustrated in FIGs. 1 to 5, the band-type electronic apparatus 10 includes: a band-shaped body 11 including a bending mechanism 15, the adjustment mechanism 16, and displacing mechanisms 19 and 20; and a display device 12, a short distance wireless communication device 13, a fingerprint authentication device 14, a mobile phone communication device 21, a vibration device 22, a wireless LAN (Local Area Network) device 23, a power source 24, a speaker 25, and various circuit boards 30 which are contained in the band-shaped body 11.

In the band-type electronic apparatus 10, for example, the fixing plate 18 is fixed to the fixed plate 17 of the adjustment mechanism 16 to allow the band-shaped body 11 to have a ring shape having an opening 11P, as will be described later. In this case, the arm of the user is passed through the opening 11P and the band-shaped body 11 thus wraps around the arm of the user, whereby the band-type electronic apparatus 10 is attached to the arm of the user.

The arm of the user to be passed through the opening 11P may be a right arm or a left arm. That is, the user to which the band-type electronic apparatus 10 is to be attached may be right-handed or left-handed. Regardless of the user's dominant arm, the user is able to view the display device 12 from the line of sight direction E, i.e., able to view information displayed by the display device 12.

### [Band-Shaped Body]

The band-shaped body 11 is a band-shaped body that contains a series of component elements of the band-type electronic apparatus 10, such as the display device 12, and extends in a predetermined direction (a winding direction H). The band-shaped body 11 is configured to be attached to and detached from the arm of the user, for example, by utilizing the adjustment mechanism 16 (fixing of the fixing plate 18 to the fixed plate 17 and releasing of the fixing plate 18 from the fixed plate 17). That is, as described above, the band-shaped body 11 is configured to be attached to the arm of the user by being wrapped around the arm of the user, and configured to be detached from the arm of the user after being attached to the arm of the user.

Note that regions S1 and S2 illustrated in FIGs. 1, 4, and 5 respectively represent two regions that are determined on the basis of a position of the user to which the band-type electronic apparatus 10 (the band-shaped body 11) is attached. The region S1 is a region on which user is positioned, with the band-type electronic apparatus 10 being attached to the arm of the user and with the user being able to visually recognize the display device 12 from the line of sight direction E accordingly. In contrast, the region S2 is a region on which the user is not positioned, i.e., a region on the opposite side of the user (the region S1) via the display device 12.

In particular, the band-shaped body 11 has, for example, three internal spaces (storage rooms) 11R1, 11R2, and 11R3 that are isolated from each other to contain the series of component elements of the band-type electronic apparatus 10 described above. The storage room 11R1 is, for example, disposed between the storage room 11R2 and the storage room 11R3 in the winding direction H. The storage room 11R2 is disposed on a side closer to the region S2 than the storage room 11R1, for example, and the storage room 11R3 is disposed on a side closer to the region S1 than the storage room 11R1, for example.

Thus, the band-shaped body 11 includes, for example, a band part 11A having the storage rooms 11R1 and 11R3 and a band part 11B having the storage room 11R2. Accordingly, the band-shaped body 11 is, for example, a coupling body in which the band parts 11A and 11B, the bending mechanism 15, the adjustment mechanism 16, and the displacing mechanisms 19 and 20 are coupled to each other.

The band-shaped body 11 also has an opening 11K that exposes the display device 12 to allow the display device 12 to display the information. The opening 11K extends, for example, in the winding direction H.

### [Display Device]

The display device 12 is a display that displays the information, and displays the information toward user, with the band-shaped body 11 being attached to the arm of the user. This allows the user wearing the band-type electronic apparatus 10 to visually recognize the display device 12 (the information displayed by the display device 12) from the line of sight direction E. A type of the information described here is not particularly limited. For example, the information may be any one or two or more of a character, a symbol, an image, a picture (a moving image), and the like. Note that the display device 12 is shaded in each of FIGs. 1 and 2.

The display device 12 is contained in, for example, the storage room 11R1 as illustrated in FIG. 4. Because the band-shaped body 11 is curved, for example, in the winding direction H to wrap around the arm of the user, the display device 12 is curved, for example, in the winding direction H as with the band-shaped body 11 described above. In this case, it is preferable that a display region of the display device 12 be extended (offset) to the side closer to the region S1, in order to allow the user to see the display content of the display device 12 with the band-shaped body 11 being attached to the arm of the user.

A type of the display device 12 is not particularly limited. For example, the display device 12 may be an organic EL (Electro Luminescence) display device or the like. Accordingly, the display device 12 includes, for example, an organic EL display panel 121 that displays the information using an organic EL phenomenon. The content of the information to be displayed by the display device 12 is not particularly limited. For example, the content of the information may be time, date, a communication history of the short distance wireless communication device 13, an authentication history of the fingerprint authentication device 14, a communication history of the mobile phone communication device 21, an operation history of the vibration device 14, a communication history of the wireless LAN device 23, and a remaining amount of the power source 24.

It is preferable that the storage room 11R1 in which the display device 12 is contained be waterproofed. This is to prevent the display device 12 from malfunctioning and breaking down due to water penetration into the storage room 11R1.

Meanwhile, it is preferable that a thickness of a portion of the band part 11A in which the display device 12 is contained be as thin as possible. This is because, by reducing a thickness of a portion which is visually recognized by the user easily, a thickness of the band-type electronic apparatus 10 is less likely to give a sense of existence (discomfort) to the user, which improves design of the band-type electronic apparatus 10.

### [Short Distance Wireless Communication Device]

The short distance wireless communication device 13 is a first communicator that performs a short distance wireless communication. As illustrated in FIG. 4, the short distance wireless communication device 13 is contained in the storage room 11R2 that is different from the storage room 11R1 in which the display device 12 is contained. That is, the short distance wireless communication device 13 is not disposed on the side closer to the region S1 than the display device 12 but is disposed on the side closer to the region S2 than the display device 12. Accordingly, the short distance wireless communication device 13 is disposed on a side (the region S2) opposite to the user (the region S1) via the display device 12, with the band-shaped body 11 being attached to the arm of the user.

A type of the short distance wireless communication device 13 is not particularly limited. For example, the short distance wireless communication device 13 may be a communication device that performs a short distance communication based on the NFC (Near Field Communication) standard. Accordingly, the short distance wireless communication device 13 includes, for example, a flat NFC antenna 131. The NFC antenna 131 is curved, for example, along the band-shaped body 11 curved in the winding direction H. Note that the NFC antenna 131 may have, for example, one or two or more openings to improve curvature (flexibility) of the NFC antenna 131.

The band-type electronic apparatus 10 including the short distance wireless communication device 13 functions as a contactless IC card, for example, in various applications that utilize the short distance communication. Specifically, by utilizing the short distance wireless communication device 13, it is possible to use the band-type electronic apparatus 10 as a public transportation common ride card, a cash card, an electronic money card, an entrance/exit card, or the like.

### [Fingerprint Authentication Device]

The fingerprint authentication device 14 is a finger authentication section that performs authentication of, for example, a fingerprint of a finger in contact with a display surface of the display device 12. For example, the fingerprint authentication device 14 is so contained in the storage room 11R1 as to partially overlap with the display device 12 as illustrated in FIG. 4. Here, the fingerprint authentication device 14 is disposed, for example, on the side closer to the region S2 than the region S1 in a region overlapped with the display device 12.

Specifically, the fingerprint authentication device 14 includes, for example, a fingerprint authentication sensor 141. The fingerprint authentication sensor 141 detects, for example, the fingerprint of the finger that is in contact with the display surface of the display device 12, and then compares a pattern of the detected fingerprint with a pattern of a fingerprint for comparison.

In a case where both of the fingerprint patterns coincide with each other, the fingerprint authentication sensor 141 permits an operation of the band-type electronic apparatus10 via a main circuit 301 and a fingerprint authentication circuit 302 described below, for example, by determining that a legitimate user is accessing the band-type electronic apparatus 10.

In contrast, in a case where both of the fingerprint patterns do not coincide with each other, the fingerprint authentication sensor 141 does not permit the operation of the band-type electronic apparatus 10 via the main circuit 301 and the fingerprint authentication circuit 302, for example, by determining that a third party other than the legitimate user is accessing the band-type electronic apparatus 10.

### [Bending Mechanism]

The bending mechanism 15 is a bending part (a hinge mechanism) that bends the band-shaped body 11 in the winding direction H on an as-necessary basis, in order to bring the band-shaped body 11 into close contact with the arm of the user even in a case where an inner diameter of the opening 11P is varied by utilizing the adjustment mechanism 16. The bending mechanism 15 includes, for example, two pivot shafts 151. The two pivot shafts 151 are two bending pivot shafts that are used to bend the band-shaped body 11 by utilizing a pivoting operation of the bending mechanism 15. The pivot shafts 151 each extend, for example, in a direction that intersects the winding direction H, and the two pivot shafts 151 are arranged, for example, in the winding direction H. Thus, by utilizing the bending mechanism 15 (the biaxial hinge mechanism), the band-shaped body 11 is bendable at two locations that are proximate to each other.

A position of the bending mechanism 15 is not particularly limited. In particular, it is preferable that the bending mechanism 15 be disposed between the display device 12 and the short distance wireless communication device 13 as illustrated in FIG. 4. This is because the bending mechanism 15, that is, bending locations of the band-shaped body 11, becomes difficult to see from the user. In this case, for example, the bending mechanism 15 is pivotally coupled to the band part 11A via one of the pivot shafts 151 and pivotally coupled to the band part 11B via the other pivot shaft 151. Accordingly, the bending mechanism 15 is disposed between, for example, the band part 11A and the band part 11B. Note that, unlike the storage room 11R1 in which the display device 12 is contained, the bending mechanism 15 may not have to be waterproofed.

### [Adjustment Mechanism]

The adjustment mechanism 16 is an adjuster that adjusts the inner diameter of the opening 11P by adjusting a size (a length) of the band-shaped body 11 in the winding direction H. The adjustment mechanism 16 is disposed, for example, between the band part 11A and the band part 11B. More specifically, the adjustment mechanism 16 is disposed between the mobile phone communication device 21 and the wireless LAN device 23.

An outer diameter of the arm of the user varies depending on the sex and age of the user. However, by utilizing the adjustment mechanism 16, it is possible to adjust the length of the band-shaped body 11, i.e., the inner diameter of the opening 11P to fit to the outer diameter of the arm of the user. Accordingly, because the band-shaped body 11 comes into close contact with the arm of the user regardless of the outer diameter of the arm of the user, the band-type electronic apparatus 10 is easily attached to the arm of the user.

Specifically, for example, the adjustment mechanism 16 includes the fixed plate 17 and the fixing plate 18 as illustrated in FIGs. 1 and 3 to 5.

### (Fixed Plate)

The fixed plate 17 is, for example, a fixed part having a plurality of insertion openings 171 arranged in the winding direction H. More specifically, the fixed plate 17 includes therein, for example, two movable plates 173 (a left movable plate 173L and a right movable plate 173R), and has an insertion space 172 provided on an inner side of the two movable plates 173.

The plurality of insertion openings 171 is an opening into which later-described one or two or more insertion pins 181 provided on the fixing plate 18 are to be inserted. Here, the fixed plate 17 has, for example, five insertion openings 171 (171A, 171B, 171C, 171D, and 171E). For example, the insertion openings 171A 171B, 171C, 171D, and 171E are disposed in this order from an end of the fixed plate 17 toward the rear. An inner diameter of each of the insertion openings 171 is, for example, larger than a maximum outer diameter of the insertion pin 181.

The insertion space 172 is provided on the inner side of the two movable plates 173, and is a space into which an end part of the insertion pin 181 that has passed through the insertion opening 171 is to be inserted. The insertion space 172 is in communication with, for example, each of the insertion openings 171A to 171E.

The two movable plates 173 (the left movable plate 173L and the right movable plate 173R) are a pair of movable members that allow the insertion pin 181 to be attached to and detached from the insertion opening 171 by fixing (locking) or releasing (unlocking) the insertion pin 181 inserted into the insertion opening 171. The left movable plate 173L and the right movable plate 173R are, for example, partially overlapped with each other, and have planar shapes similar to each other except that a right side and a left side are reversed from each other. Note that, in each of FIGs. 6 and 7, the left movable plate 173L disposed on an upper side is shaded lightly, and the right movable plate 173R disposed on a lower side is shaded darkly. It is to be also noted that, in each of FIGs. 6 and 7, portions of the fixed plate 17 other than the two movable plates 173 (the left movable plate 173L and the right movable plate 173R) are indicated by broken lines, and the insertion pin 181 is also indicated by a broken line.

Specifically, the left movable plate 173L includes, for example, a movable plate L1 and a protrusion plate L2. The movable plate L1 has, for example, an opening LK extending in the winding direction H and a recessed part LU so provided on an inner side of the opening LK as to be partially recessed in a direction that intersects the winding direction H. The number of recessed parts LU corresponds to the number of insertion openings 171. Accordingly, the movable plate L1 has, for example, five recessed parts LU.

The protrusion plate L2 is so coupled to the movable plate L1 as to protrude partially in the direction that intersects the winding direction H. Thus, the protrusion plate L2 is led out to an outer side of the insertion space 172.

For example, the left movable plate 173L is movable in the direction that intersects the winding direction H, and is biased to an outer side (in a direction toward the left side in FIG. 6) via a spring 174. That is, the left movable plate 173L is biased in a direction that moves away from the right movable plate 173R by utilizing biasing force of the spring 174, for example. Thus, by pressing the protrusion plate L2 toward an inner side (a direction toward the right side in FIG. 6), the user is able to move the movable plate L1 to the inner side. As a matter of course, when the user stops pressing the protrusion plate L2, the movable plate L1 moves toward the outer side by utilizing restoring force of the above-described spring 174 and the movable plate L1 thus returns to the original position. Note that the number of springs 174 is not particularly limited. A type of the spring 174 is also not particularly limited. For example, the spring 174 may be a coil spring, a leaf spring, or the like. FIGs. 6 and 7 each illustrate, for example, a case where two coil springs are used as the spring 174.

For example, the right movable plate 173R has a configuration in which the left side and right side are reversed from the configuration of the left movable plate 173L as described above. That is, the right movable plate 173R includes, for example, a movable plate R1 and a protrusion plate R2. The movable plate R1 has, for example, an opening RK and a recessed part RU. The number of recessed parts RU corresponds to the number of insertion openings 171. Accordingly, the movable plate R1 has, for example, five recessed parts RU.

The protrusion plate R2 is so coupled to the movable plate R1 as to protrude partially in the direction that intersects the winding direction H. Thus, the protrusion plate R2 is led out to the outer side of the insertion space 172.

For example, the right movable plate 173R is movable in the direction that intersects the winding direction H, and is biased to the outer side (in the direction toward the right side in FIG. 6) via a spring 175, as with the left movable plate 173L described above. That is, the right movable plate 173R is biased in a direction that moves away from the left movable plate 173L by utilizing biasing force of the spring 175, for example. Thus, by pressing the protrusion plate R2 toward the inner side (the direction toward the left side in FIG. 6), the user is able to move the movable plate R1 to the inner side. As a matter of course, when the user stops pressing the protrusion plate R2, the movable plate R1 returns to the original position by utilizing restoring force of the spring 174 described above and the movable plate L1 thus returns to the original position. Details of the number of springs 175 and a type of the spring 175 are similar to, for example, the spring 174.

Here, as described above, the left movable plate 173L and the right movable plate 173R are partially overlapped with each other. Further, for example, the left movable plate 173L and the right movable plate 173R are biased in the directions in which the left movable plate 173L and the right movable plate 173R move away from each other by utilizing the biasing force of the springs 174 and 175 as illustrated in FIG. 6, in a state where the insertion pin 181 is inserted into the insertion opening 171 and the user is not pressing each of the protrusion plates L2 and R2. Thus, an opening 173K is formed by the recessed part LU provided on the left movable plate 173L and the recessed part RU provided on the right movable plate 173R. In this state, the recessed parts LU and RU are brought close to each other, causing a width W of the opening 173K (a size in an X-axis direction) to be smaller than the maximum outer diameter D of the insertion pin 181 and thereby preventing the insertion pin 181 from being pulled out from the insertion opening 171. Accordingly, the fixing plate 18 is fixed (locked) to the fixed plate 17.

In contrast, for example, the left movable plate 173L and the right movable plate 173R are pressed in the directions in which the left movable plate 173L and the right movable plate 173R come close to each other by utilizing the restoring force of the springs 174 and 175 as illustrated in FIG. 7, in a state where the insertion pin 181 is inserted into the insertion opening 171 and the user presses each of the protrusion plates L2 and R2. Thus, the left movable plate 173L and the right movable plate 173R each move toward the inner side. In this state, the recessed parts LU and RU are separated away from each other, causing the width W of the opening 173K to be larger than the maximum outer diameter D of the insertion pin 181 and thereby allowing the insertion pin 181 to be pulled out from the insertion opening 171. Accordingly, the fixing plate 18 is released (unlocked) from the fixed plate 17.

### (Fixing Plate)

The fixing plate 18 is, for example, a fixing part having one or two or more insertion pins 181 arranged in the winding direction H. The insertion pin 181 is a plurality of projections insertable into a portion of the plurality of insertion openings 171. Accordingly, the number of insertion pins 181 is, for example, smaller than the number of insertion openings 171.

Specifically, in a case where the fixed plate 17 has five insertion openings 171, the fixing plate 18 has, for example, two or more insertion pins 181, more specifically, two insertion pins 181. This is because the fixing plate 18 becomes easily fixed to the fixed plate 17, and the fixing plate 18 becomes difficult to rotate in a state where the fixing plate 18 is fixed to the fixed plate 17. The outer diameter of the insertion pin 181 is, for example, larger in a front part than in a rear part in a direction of insertion into the insertion opening 171.

FIG. 4 illustrates a case where, for example, two insertion pins 181 are inserted into the insertion openings 171A and 171B. As a matter of course, the two insertion pins 181 are not limited to the insertion openings 171A and 171B. The two insertion pins 181 may be inserted into the insertion openings 171B and 171C, the insertion openings 171C and 171D, or the insertion openings 171D and 171E, for example.

In particular, for example, in a state in which the insertion pins 181 are inserted into a portion of the plurality of insertion openings 171, the fixing plate 18 is configured to shield all of the remaining insertion openings 171 out of the plurality of insertion openings 171. That is, for example, in a case where the number of insertion pins 181 is two and even if those two insertion pins are inserted into any two of the insertion openings 171, the fixing plate 18 is able to shield the remaining one or two or more insertion openings 171 into which the two insertion pins 181 have not been inserted, without exposing the one or two or more insertion openings 171.

Accordingly, as illustrated in FIG. 5, a tip length L of the fixing plate 18, i.e., a distance between a tip of the fixing plate 18 and the insertion pin 181 that is closest to the tip, is a length that allows for shielding of the remaining one or two or more insertion openings 171 into which the two insertion pins 181 described above have not been inserted. For example, in FIG. 4, the two insertion pins 181 are inserted into the insertion openings 171A and 171B; accordingly, the tip length L of the fixing plate 18 is a length that allows for the shielding of the insertion openings 171C and 171E.

### [Displacing Mechanism]

The displacing mechanism 19 is a first displacing part that displaces the fixed plate 17 in the winding direction H. The displacing mechanism 19 includes, for example, one pivot shaft 191. The one pivot shaft 191 is a single first displacing pivot shaft used to displace the fixed plate 17 by utilizing the pivoting operation of the displacing mechanism 19. The pivot shaft 191 extends, for example, in the direction that intersects the winding direction H. Even in a case where the length of the band-shaped body 11 is varied by utilizing the adjustment mechanism 16, it is possible to adjust an extending direction of the fixed plate 17 such that the fixed plate 17 comes into close contact with the arm of the user, by displacing the fixed plate 17 through utilization of the displacing mechanism 19 (an uniaxial hinge mechanism).

The pivot shaft 191 is, for example, an attachable and detachable spring rod. Thus, for example, the fixed plate 17 is made attachable and detachable in accordance with the attachment and the detachment of the pivot shaft 191, allowing for replacement of the fixed plate 17 by another fixed plate 17. A configuration of the other fixed plate 19 is not particularly limited. For example, the other fixed plate 17 may have the number of insertion openings 171 different from the number of insertion openings 171 of the fixed plate 17. That is, for example, by detaching the fixed plate 17 having five insertion openings 171, it is possible to attach the other fixed plate 17 having the number of insertion openings 171 other than five.

The displacing mechanism 20 is a second displacing part that displaces the fixing plate 18 in the winding direction H. The displacing mechanism 20 includes, for example, one pivot shaft 201. The one pivot shaft 201 is a single second displacing pivot shaft used to displace the fixing plate 18 by utilizing the pivoting operation of the displacing mechanism 20. The pivot shaft 201 extends, for example, in the direction that intersects the winding direction H. Even in a case where the length of the band-shaped body 11 is varied by utilizing the adjustment mechanism 16, it is possible to adjust an extending direction of the fixing plate 18 such that the fixing plate 18 comes into close contact with the fixed plate 17, by displacing the fixing plate 18 through utilization of the displacing mechanism 20 (an uniaxial hinge mechanism).

The pivot shaft 201 is, for example, an attachable and detachable spring rod as with the pivot shaft 191 described above. Thus, for example, the fixing plate 18 is made attachable and detachable in accordance with the attachment and the detachment of the pivot shaft 201, allowing for replacement of the fixing plate 18 by another fixing plate 18. A configuration of the other fixed plate 20 is not particularly limited. For example, the other fixing plate 18 may have the number of insertion pins 181 different from the number of insertion pins 181 of the fixing plate 18. That is, for example, by detaching the fixing plate 18 having two insertion pins 181, it is possible to attach the other fixing plate 18 having the number of insertion pins 181 other than two.

### [Mobile Phone Communication Device]

The mobile phone communication device 21 is a second communicator that performs a mobile phone communication, and is contained, for example, in the storage room 11R3 as illustrated in FIG. 4.

A type of the mobile phone communication device 21 is not particularly limited. For example, the mobile phone communication device 21 may be a communication device that performs high-speed data communication based on the LTE (Long Term Evolution) standard. Accordingly, the mobile phone communication device 21 includes, for example, a flat LTE antenna 211. The LTE antenna 211 is curved, for example, along the band-shaped body 11 curved in the winding direction H.

A position of the mobile phone communication device 21 is not particularly limited as long as the position of the mobile phone communication device 21 is positioned, for example, inside the storage room 11R3. In particular, it is preferable that the mobile phone communication device 21 be disposed at a position away from the arm of the user with the band-shaped body 11 being attached to the arm of the user. This is because the LTE antenna 211 may possibly become less sensitive in a case where the LTE antenna 211 is too close to ta human body (the arm of the user). A distance between the mobile phone communication device 21 and the human body is not particularly limited. For example, the distance between the mobile phone communication device 21 and the human body is, for example, about 10 millimeters.

The mobile phone communication device 21 (the LTE antenna 211) has, for example, a structure in which a conductor is hardly exposed. Accordingly, the storage room 11R3 in which the LTE antenna 211 is contained may not have to be waterproofed, unlike the storage room 11R1 in which the display device 12 is contained.

### [Vibration Device]

The vibration device 22 is a device that vibrates on an as-necessary basis. For example, the vibration device 22 is contained in the storage room 11R1 as illustrated in FIG. 4. The vibration device 22 includes, for example, a vibration motor 221. The vibration motor 221 vibrates, for example, upon reception received by the mobile phone communication device 21.

### [Wireless LAN Device]

The wireless LAN device 23 is a device that performs a wireless LAN communication. For example, the wireless LAN device 23 is contained in the storage room 11R2 as illustrated in FIG. 4.

A type of the wireless LAN device 23 is not particularly limited. For example, the wireless LAN device 23 may be a communication device that performs a wireless LAN communication based on the Wi-Fi (Wireless Fidelity) standard (Registered Trademark). Accordingly, the wireless LAN device 23 includes, for example, a flat Wi-Fi antenna 231. The Wi-Fi antenna 231 is curved, for example, along the band-shaped body 11 curved in the winding direction H.

### [Power Source]

The power source 24 is a source of power of electric power to be fed to the series of component elements of the band-type electronic apparatus 10. A type of the power source 24 is not particularly limited. For example, the power source 24 includes a battery. A type and the number of batteries are not particularly limited. Here, the battery is, for example, a coin-type secondary battery, and the number of batteries is, for example, two.

The power source 24 is contained in, for example, the storage room 11R2 as illustrated in FIG. 4. In a case where the power source 24 includes the coin-type secondary battery, the plurality of coin-type secondary batteries is easily contained (arranged) inside the curved storage room 11R2 owing to a small size of the coin-type secondary battery. Note that the storage room 11R2 in which the power source 24 is contained is preferably waterproofed. This is to prevent characteristics of the power source 24 from deteriorating due to penetration of a moisture into the storage room 11R2. This is also to prevent, in a case where an electronic component such as the Wi-Fi antenna 231 is contained in the storage room 11R2, an occurrence of a failure of the electronic component. Examples of the failure includes breakdown and performance degradation due to short circuit, corrosion, etc.

The display device 12 or the like contained in the storage room 11R1 is coupled to the power source 24 contained in the storage room 11R2 through, for example, an unillustrated flexible board. Thus, it is possible to freely bend the band-shaped body 11 by utilizing the bending mechanism 15 while supplying the electric power from the power source 24 to the display device 12 or the like by utilizing the flexible board.

### [Speaker]

The speaker 25 is a device that generates a sound, a music, and the like on an as-necessary basis. For example, the speaker 25 is contained in the storage room 11R1 as illustrated in FIG. 4. The speaker 25 generates a predetermined ringtone, for example, upon the reception received by the mobile phone communication device 21. However, applications of the sound generated by the speaker 25 is not particularly limited; accordingly, the applications of the sound generated by the speaker 25 may include an application for outputting an audio of the information (the picture) to be displayed by the display device 12.

### [Various Circuit Boards]

The various circuit boards 30 include a plurality of circuit boards for controlling the series of component elements of the band-type electronic apparatus 10. For example, the circuit board is a printed circuit board. Specifically, the various circuit boards 30 include, for example, a main circuit board 301 that controls the band-type electronic apparatus 10 as a whole and a fingerprint authentication circuit board 302 that controls the fingerprint authentication device 14. For example, the main circuit board 301 and the fingerprint authentication circuit board 302 are contained in the storage room 11R1 as illustrated in FIG. 4.

The NFC antenna 131 is disposed in the storage room 11R2, whereas the main circuit board 31 that controls the NFC antenna 131 is contained in the storage room 11R1 that is different from the storage room 11R2. Thus, the NFC antenna 131 and the main circuit board 31 are so disposed as to be distributed to the storage rooms 11R1 and 11R2. Thus, a thickness of the band-type electronic apparatus 10 is reduced as compared with a case where the NFC antenna 131 and the main circuit board 31 are contained together in the storage room 11R2. This advantage is also obtained similarly by allowing the LTE antenna 211 to be disposed in the storage room 11R3 and allowing the main circuit board 301 that controls the LTE antenna 211 to be contained in the storage room 11R1 that is different from the storage room 11R3.

### [Other Component Elements]

Note that the band-type electronic apparatus 10 may further include, for example, any one or two or more of other component elements other than the series of component elements described above. Types of the other component elements are not particularly limited. Specifically, examples of the other component elements may include a microphone used upon a telephone communication that utilizes the mobile phone communication device 21. However, in a case of using the microphone, it is preferable that the microphone be disposed in the region S1 and the speaker 25 be disposed at a position away from the microphone, in order to ensure convenience (a sound collecting property) upon use of the microphone and to prevent the speaker 25 from howling due to the presence of the microphone. The position of the speaker 25 in this case is not particularly limited. For example, the position of the speaker 25 may be in the region S2. More specifically, the position of the speaker 25 may be in the vicinity of the bending mechanism 15 and in the vicinity of the power source 24. Examples of the other component elements may also include a cradle terminal used for charging the power source 24 and transferring data. Examples of the other component elements may further include a light source that emits light on an as-necessary basis.

### [1-2. Operation]

The band-type electronic apparatus 10 operates as follows, for example. In the following, reference will be made from time to time to FIGs. 1 to 7 which have already been described.

### [Operation of Various Functions]

The band-type electronic apparatus 10 performs various functions described below by utilizing the series of component elements described above. In this case, the operation of the band-type electronic apparatus 10 that performs the various functions is controlled by the various circuit boards 30 (the main circuit board 301 and the fingerprint authentication circuit board 302).

First, the band-type electronic apparatus 10 displays the information by utilizing the display device 12 such as the organic EL display device. Second, the band-type electronic apparatus 10 performs the short distance wireless communication by utilizing the short distance wireless communication device 13 that includes the NFC antenna 131. Third, the band-type electronic apparatus 10 utilizes the fingerprint authentication device 14 that includes the fingerprint authentication sensor 141 to perform the fingerprint authentication of the finger in contact with the display device 12. Fourth, the band-type electronic apparatus 10 performs the mobile phone communication by utilizing the mobile phone communication device 21 that includes the LTE antenna 211. Fifth, the band-type electronic apparatus 10 vibrates upon, for example, the reception received by the mobile phone communication device 21 by utilizing the vibration device 22 that includes the vibration motor 221. Sixth, the band-type electronic apparatus 10 performs the wireless LAN communication by utilizing the wireless LAN device 23 that includes the Wi-Fi antenna 231. Seventh, the band-type electronic apparatus 10 utilizes the speaker 25 to generate the ringtone upon, for example, the reception received by the mobile phone communication device 21.

### [Attachment and Detachment Operation]

Upon attaching the band-type electronic apparatus 10 by the user, the user first presses inwardly each of the left movable plate 173L (the protrusion plate L2) and the right movable plate 173R (the protrusion plate R2) as illustrated in FIGs. 6 and 7, with the fixing plate 18 being fixed (locked) to the fixed plate 17 in the adjustment mechanism 16 as illustrated in FIG. 4. In this case, the fixing plate 18 is released (unlocked) from the fixed plate 17, allowing the insertion pin 181 to be pulled out from the insertion opening 171 as illustrated in FIG. 5. Thus, the fixing plate 18 is detached from the fixed plate 17, thereby separating the band-shaped body 11 in the middle.

Thereafter, the user inserts the insertion pin 181 into the insertion opening 171 while pressing inwardly each of the left movable plate 173L (the protrusion plate L2) and the right movable plate 173R (the protrusion plate R2) as illustrated in FIGs. 6 and 7, with the arm of the user being passed through the opening 11P. In this case, the fixing plate 18 is fixed (locked) to the fixed plate 17 after the insertion pin 181 is inserted into the insertion opening 171, preventing the insertion pin 181 from being pulled out from the insertion opening 171 as illustrated in FIG. 4. Thus, the band-shaped body 11 comes into close contact with the arm of user. Accordingly, the band-type electronic apparatus 10 is attached to the arm of the user.

In this case, the inner diameter of the opening 11P is varied by changing the insertion opening 171 into which the insertion pin 181 is inserted, making it possible to adjust the inner diameter of the opening 11P in accordance with the outer diameter of the arm of the user. Specifically, when the two insertion pins 181 are inserted into the insertion openings 171A and 171B, the inner diameter of the opening 11P becomes larger, whereas when the two insertion pins 181 are inserted into the insertion openings 171D and 171E, the inner diameter of the opening 11P becomes smaller. This allows the band-shaped body 11 to come into close contact with the arm of the user regardless of the outer diameter of the arm of the user and thus the band-type electronic apparatus 10 is attached to the arm of the user easily.

As a matter of course, it is also possible to detach the band-type electronic apparatus 10 from the arm of the user by performing a procedure (a detachment procedure) opposite to the procedure of attaching the band-type electronic apparatus 10 described above after the attachment of the band-type electronic apparatus 10 to the arm of the user.

### <1-3. Workings and Effects>

According to the band-type electronic apparatus 10, where the band-shaped body 11 is attached to the user, the display device 12 is so disposed as to display the information to the user and the short distance wireless communication device 13 is disposed on the opposite side of the user via the display device 12. That is, the user is positioned in the region S1, whereas the short distance wireless communication device 13 is positioned in the region S2 on the opposite side of the region S1.

In this case, when using the short distance wireless communication device 13 as the public transportation common ride card such as Suica and PASMO, for example, the user is able to use the short distance wireless communication device 13 while visually recognizing the information displayed by the display device 12 without changing the orientation of the arm.

In detail, in a case where the short distance wireless communication device 13 is positioned in the region S1, it is necessary for the user to change the orientation of the arm such that the short distance wireless communication device 13 faces a reading device of the public transportation common ride card, in order to use the short distance wireless communication device 13 as the public transportation common ride card. However, changing the orientation of the arm such that the short distance wireless communication device 13 face the reading device also causes the display device 12 to face the reading device as well. This allows the user to use the short distance wireless communication device 13, but allows the user not to visually recognize the information displayed by the display device 12.

In contrast, in a case where the short distance wireless communication device 13 is disposed in the region S2, the user is able to use the short distance wireless communication device 13 without changing the orientation of the arm, because the short distance wireless communication device 13 already faces the reading device. In this case, in particular, when the short distance wireless communication device 13 is disposed in the region S1, it is necessary for the user to rotate the wrist to a location where it is difficult to rotate the wrist in order to use the short distance wireless communication device 13; however, when the short distance wireless communication device 13 is disposed in the region S2, the user is able to use the short distance wireless communication device 13 without having to rotate the wrist to the location where it is difficult to rotate the wrist. Moreover, because the short distance wireless communication device 13 faces the reading device whereas the display device 12 displays the information to the user, the user is able to visually recognize the information displayed by the display device 12 even while using the short distance wireless communication device 13.

For these reasons, the user with the band-type electronic apparatus 10 being attached thereto is able to use the short distance wireless communication device 13 while visually recognizing the information displayed by the display device 12, without requiring an operation of changing the orientation of the arm. Thus, it is possible to use both the display device 12 and the short distance wireless communication device 13 together. Hence, it is possible to achieve excellent convenience.

In this case, in particular, both the display device 12 and the short distance wireless communication device 13 are contained in the band-shaped body 11. Thus, it is possible to achieve the small-sized band-type electronic apparatus 10 having a simple appearance while ensuring various functions that utilize the display device 12 and the short distance wireless communication device 13.

In particular, if the band-type electronic apparatus 10 is provided with the fingerprint authentication device 14, it is possible to use the band-type electronic apparatus 10 safely while ensuring a safety of information management through utilization of the fingerprint authentication, which makes it possible to achieve higher effect accordingly.

In addition, if the band-type electronic apparatus 10 is provided with the bending mechanism 15 (the biaxial hinge mechanism), it is possible for the band-shaped body 1 1 to be bent at various angles by utilizing the bending mechanism 15. This makes it easier to attach the band-type electronic apparatus 10 such that the band-shaped body 11 comes into close contact with the arm of the user regardless of the outer diameter of the arm of the user. Thus, it becomes easier for the user to attach the band-type electronic apparatus 10 without experiencing the attachment burden, a discomfort at the time of the attachment, etc., which makes it possible to achieve higher effect accordingly.

In this case, if the bending mechanism 15 is disposed between the display device 12 and the short distance wireless communication device 13, the bending mechanism 15 is disposed closer to the region S2 than the display device 12. In this case, it becomes difficult for a bent location of the band-shaped body 11 to be visible from the user even when the band-shaped body 11 is bent by utilizing the bending mechanism 15. Thus, the presence of the bending mechanism 15 is less likely to influence the design of the band-type electronic apparatus 10 as a whole, which makes it possible to achieve even higher effect accordingly.

In addition, if the band-type electronic apparatus 10 is provided with the adjustment mechanism 16 (the fixed plate 17 and the fixing plate 18), the fixing plate 18 is fixed to the fixed plate 17 by utilizing the insertion of the insertion pin 181 into the insertion opening 171, making it easier for the band-type electronic apparatus 10 to be fixed to the arm of the user. Further, the length of the band-shaped body 11 (the inner diameter of the opening 11P) is adjusted by the adjustment mechanism 16 so as to fit to the outer diameter of the arm of the user, making it easier for the band-type electronic apparatus 10 to be attached to the arm of the user regardless of sex, age, etc., which makes it possible to achieve higher effect accordingly.

In this case, if the fixing plate 18 is configured to shield all of the remaining insertion openings 171 with one or two or more insertion pins 181 being inserted into a portion of the plurality of insertion openings 171, the remaining insertion openings 171 in which the insertion pins 181 are not inserted become not visible from the user even when the insertion pin 181 is inserted into any of the insertion openings 171. Thus, the presence of the insertion openings 171 is less likely to influence the design of the band-type electronic apparatus 10 as a whole, which makes it possible to achieve higher effect accordingly.

In addition, if the fixed plate 17 includes the left movable plate 173L and the right movable plate 173R, if the fixing plate 18 is fixed to the fixed plate 17 by utilizing the biasing state of the left movable plate 173L and the right movable plate 173R, and if the fixing plate 18 is released from the fixed plate 17 by utilizing the the pressing operation of the left movable plate 173L and the right movable plate 173R by the user, a state of the fixing plate 18 to the fixed plate 17 (fixing or releasing) is switched by utilizing the simple operation of the user. Thus, it is possible for the user to easily attach and detach the band-type electronic apparatus 10, which makes it possible to achieve higher effect accordingly.

In addition, if the band-type electronic apparatus 10 is provided with the displacing mechanism 19 and the fixed plate 17 is made attachable and detachable in accordance with the attachment and the detachment of the pivot shaft 191, it becomes possible to exchange the fixed plate 17. Thus, by replacing the fixed plate 17 with any other fixed plate 17 (any other fixed plate 17 in which, for example, the number of insertion openings 171 is changed) in accordance with the outer diameter of the arm of the user, it becomes easier for the band-type electronic apparatus 10 to be attached such that the band-shaped body 11 comes into close contact with the arm of the user, which makes it possible to achieve higher effect accordingly.

In addition, if the band-type electronic apparatus 10 is provided with the displacing mechanism 20 and the fixing plate 18 is made attachable and detachable in accordance with the attachment and the detachment of the pivot shaft 201, it becomes possible to exchange the fixing plate 20. Thus, by replacing the fixing plate 18 with any other fixing plate 18 (any other fixing plate 18 in which, for example, the number of projections 181 is changed) in accordance with the outer diameter of the arm of the user, it becomes easier for the band-type electronic apparatus 10 to be attached such that the band-shaped body 11 comes into close contact with the arm of the user, which makes it possible to achieve higher effect accordingly.

In addition, if the band-type electronic apparatus 10 is provided with the mobile phone communication device 21 (the LTE antenna 211) and the mobile phone communication device 21 is disposed at a position away from the arm of the user with the band-shaped body 11 being attached to the arm of the user, it is possible to ensure the sensitivity of the mobile phone communication device 21, which makes it possible to achieve higher effect accordingly.

### [2. Modification Examples]

It is possible to change the configuration of the band-type electronic apparatus 10 described above as appropriate. Note that, for a series of modification examples to be described below, any two or more of the modification examples may be combined with each other.

Specifically, for example, the location where the fingerprint authentication device 14 is mounted in the band-type electronic apparatus 10 is not limited to the location (the storage room 11R1) illustrated in FIG. 4; hence, it is possible to change the location to any location. That is, the fingerprint authentication device 14 may be disposed at a position which does not overlap with the display device 12, for example. Changing the mounting location to any location as described above applies similarly to the bending mechanism 15, the mobile phone communication device 21, the vibration device 22, the wireless LAN device 23, the power source 24, the speaker 25, and the various circuit boards 30. In these cases, it is possible to achieve similar effects as well. Note, however, that the bending mechanism 15 is preferably disposed between the display device 12 and the short distance wireless communication device 13 for reasons described above.

In addition, for example, the number of bending mechanisms 15 is not limited to one; hence, the number of bending mechanisms 15 may be two or more. In this case, utilizing two or more bending mechanisms 15 makes it easier for the band-shaped body 11 to come into close contact with the arm of the user, which makes it possible to achieve a higher effect. However, because the bending mechanisms 15 become visually recognized by the user easily if the number of bending mechanisms 15 is increased, the presence of the bending mechanisms 15 can possibly influence the design of the band-type electronic apparatus 10 as a whole.

In addition, for example, only the mobile phone communication device 21 (the LTE antenna 211) is contained in the storage room 11R3 and the LTE antenna 211 is disposed so as to be away from the human body in FIG. 4. This means that a redundant space exists inside the storage room 11R3. Use of the redundant space is not particularly limited. Specifically, for example, nothing may be contained in the redundant space. Alternatively, for example, a certain member that does not influence the sensitivity of the LTE antenna 211 may be contained in the redundant space, in order to effectively utilize the redundant space. The member is, for example, a reinforcing material for reinforcing the band-shaped body 11. Further, for example, the redundant space may be used as the resonance space of the speaker 25. In these cases, it is possible to achieve similar effects as well.

In addition, the band-type electronic apparatus 10 may be provided with any one or two or more of other component elements other than the above-described series of component elements. More specifically, the band-type electronic apparatus 10 may be provided with other devices other than the above-described series of devices, or other mechanisms other than the above-described series of mechanisms. Examples of other devices may include an action meter that measures a heart rate and a blood flow, an acceleration sensor that detects a motion and a gesture of a living organism such as a human, an ultraviolet sensor used in applications such as cosmetic and health applications, a barometric sensor that measures and records an altitude, and a light source such as an LED light usable for illumination. As a matter of course, the band-type electronic apparatus 10 may not include a portion of the series of component elements described above.

Although the present technology has been described with reference to one embodiment and examples, the present technology is not limited to the modes described in the embodiments and examples, and various modifications are possible. Further, the effects described herein are merely illustrative and not restrictive; hence, other effects may be obtained.

Note that the present technology can also be configured as follows.
(1) A band-type electronic apparatus including:
   a band-shaped body configured to be attached to and detached from a user;
   a display that is contained in the body and displays information; and
   a first communicator that is contained in the body on an opposite side of the user via the display, with the body being attached to the user, and performs a short distance wireless communication.
(2) The band-type electronic apparatus according to (1), further including a fingerprint authentication section that is contained in the body and performs authentication of a fingerprint of a finger in contact with the display.
(3) The band-type electronic apparatus according to (1) or (2), in which
   the body includes a bending part that wraps around any site of the user in a winding direction and bends the body in the winding direction, and
   the bending part includes two bending pivot shafts extending in a direction that intersects the winding direction and that are arranged in the winding direction.
(4) The band-type electronic apparatus according to (3), in which the bending part is disposed between the display and the first communicator.
(5) The band-type electronic apparatus according to any one of (1) to (4), in which
   the body includes an adjuster that wraps around any site of the user in a winding direction and adjusts a size of the body in the winding direction, and
   the adjuster includes
   a fixed part having a plurality of insertion openings arranged in the winding direction, and
   a fixing part having one or two or more projections arranged in the winding direction, the one or two or more projections being configured to be inserted into a portion of the plurality of insertion openings.
(6)
   The band-type electronic apparatus according to (5), in which the fixing part is configured to shield all of remaining insertion openings out of the plurality of insertion openings, with the one or two or more projections being inserted into the portion of the plurality of insertion openings.
(7)
   The band-type electronic apparatus according to (5) or (6), in which
   the fixed part includes a pair of movable members configured to move in a direction that intersects the winding direction, the pair of movable members being biased in directions that move away from each other,
   the fixing part is fixed to the fixed part by the biasing of the pair of movable members in the directions that move away from each other, with the one or two or more projections being inserted into the portion of the plurality of insertion openings, and
   the fixing part is released from the fixed part by pressing of the pair of movable members in directions that move toward each other to be closer to the user, with the one or two or more projections being inserted into the portion of the plurality of insertion openings.
(8)
   The band-type electronic apparatus according to any one of (5) to (7), in which
   the body includes a first displacing part that displaces the fixed part in the winding direction,
   the first displacing part includes a single first displacing pivot shaft extending in a direction that intersects the winding direction, the first displacing pivot shaft being configured to be attached and detached, and
   the fixed part is configured to be attached and detached in accordance with the attachment and the detachment of the first displacing pivot shaft.
(9)
   The band-type electronic apparatus according to any one of (5) to (8), in which
   the body includes a second displacing part that displaces the fixing part in the winding direction,
   the second displacing part includes a single second displacing pivot shaft extending in a direction that intersects the winding direction, the second displacing pivot shaft being configured to be attached and detached, and
   the fixing part is configured to be attached and detached in accordance with the attachment and the detachment of the second displacing pivot shaft.
(10)
   The band-type electronic apparatus according to any one of (1) to (9), further including a second communicator that is contained in the body and performs a mobile phone communication, in which
   the second communicator is disposed at a position away from the user, with the body being attached to the user.

The present application claims the benefit of Japanese Priority Patent Application JP2018-144948 filed with the Japan Patent Office on August 1, 2018, the entire contents of which are incorporated herein by reference.

It should be understood by those skilled in the art that various modifications, combinations, sub-combinations and alterations may occur depending on design requirements and other factors insofar as they are within the scope of the appended claims or the equivalents thereof.

## Claims

1. A band-type electronic apparatus comprising:
a band-shaped body configured to be attached to and detached from a user;
a display that is contained in the body and displays information; and
a first communicator that is contained in the body on an opposite side of the user via the display, with the body being attached to the user, and performs a short distance wireless communication.

2. The band-type electronic apparatus according to claim 1, further comprising a fingerprint authentication section that is contained in the body and performs authentication of a fingerprint of a finger in contact with the display.

3. The band-type electronic apparatus according to claim 1, wherein
the body includes a bending part that wraps around any site of the user in a winding direction and bends the body in the winding direction, and
the bending part includes two bending pivot shafts extending in a direction that intersects the winding direction and that are arranged in the winding direction.

4. The band-type electronic apparatus according to claim 3, wherein the bending part is disposed between the display and the first communicator.

5. The band-type electronic apparatus according to claim 1, wherein
the body includes an adjuster that wraps around any site of the user in a winding direction and adjusts a size of the body in the winding direction, and
the adjuster includes
a fixed part having a plurality of insertion openings arranged in the winding direction, and
a fixing part having one or two or more projections arranged in the winding direction, the one or two or more projections being configured to be inserted into a portion of the plurality of insertion openings.

6. The band-type electronic apparatus according to claim 5, wherein the fixing part is configured to shield all of remaining insertion openings out of the plurality of insertion openings, with the one or two or more projections being inserted into the portion of the plurality of insertion openings.

7. The band-type electronic apparatus according to claim 5, wherein
the fixed part includes a pair of movable members configured to move in a direction that intersects the winding direction, the pair of movable members being biased in directions that move away from each other,
the fixing part is fixed to the fixed part by the biasing of the pair of movable members in the directions that move away from each other, with the one or two or more projections being inserted into the portion of the plurality of insertion openings, and
the fixing part is released from the fixed part by pressing of the pair of movable members in directions that move toward each other to be closer to the user, with the one or two or more projections being inserted into the portion of the plurality of insertion openings.

8. The band-type electronic apparatus according to claim 5, wherein
the body includes a first displacing part that displaces the fixed part in the winding direction,
the first displacing part includes a single first displacing pivot shaft extending in a direction that intersects the winding direction, the first displacing pivot shaft being configured to be attached and detached, and
the fixed part is configured to be attached and detached in accordance with the attachment and the detachment of the first displacing pivot shaft.

9. The band-type electronic apparatus according to claim 5, wherein
the body includes a second displacing part that displaces the fixing part in the winding direction,
the second displacing part includes a single second displacing pivot shaft extending in a direction that intersects the winding direction, the second displacing pivot shaft being configured to be attached and detached, and
the fixing part is configured to be attached and detached in accordance with the attachment and the detachment of the second displacing pivot shaft.

10. The band-type electronic apparatus according to claim 1, further comprising a second communicator that is contained in the body and performs a mobile phone communication, wherein
the second communicator is disposed at a position away from the user, with the body being attached to the user.
